# EUROPÄISCHE PATENTSCHRIFT

(11) **EP 2 648 926 B1**
(45) Veröffentlichungstag und Bekanntmachung des Hinweises auf die Patenterteilung: **25.10.2017**
(21) Anmeldenummer: 11790582.8
(22) Anmeldetag: 22.11.2011
(51) Int. Cl.: B60C 23/04, H04L 9/08

(54) **VERFAHREN ZUR VERSCHLÜSSELTEN FUNK-ÜBERTRAGUNG VON DATEN**
METHOD FOR THE ENCRYPTED RADIO TRANSMISSION OF DATA
PROCÉDÉ DE TRANSMISSION RADIO CHIFFRÉE DE DONNÉES

(30) Priorität: 06.12.2010 DE 102010062469
(43) Veröffentlichungstag der Anmeldung: 16.10.2013
(73) Patentinhaber: Bayerische Motoren Werke Aktiengesellschaft, 80809 München (DE)
(72) Erfinder: ZUCCHETTI, Cristian, Greenville 29609 (US); SCHWAB, Axel, 80538 München (DE)
(86) Internationale Anmeldenummer: PCT/EP2011/070715
(87) Internationale Veröffentlichungsnummer: WO 2012/076333

(56) Entgegenhaltungen:
- EP-A1- 1 849 627
- EP-A2- 2 163 407
- WO-A2-2007/144798
- JP-A- 2010 133 891
- US-A1- 2008 018 448

## Beschreibung

Die Erfindung betrifft ein Verfahren zur verschlüsselten Funk-Übertragung von Daten in Form kurzer zeitlich beabstandet aufeinander folgender Telegramme zwischen einem Sender und einem Empfänger eines Systems, wobei der Schlüssel veränderlich ist und nach einem kryptologischen Verfahren aus einer aktuellen Information abgeleitet wird. Insbesondere kann dieses Verfahren bei einem Reifendruck-Kontrollsystem eines Kraftfahrzeugs Anwendung finden, wobei die zu übertragenden Daten von einem in einem Fahrzeug-Reifen vorgesehenen Sensor stammen und an einen am Fahrzeug-Aufbau vorgesehenen Empfänger drahtlos verschlüsselt übermittelt werden. Zum technischen Umfeld wird beispielshalber auf die DE 10 2008 038 680 A1 verwiesen. US 2008/0018448 zeigt ein Reifendruckkontrollsystem, bei dem der Sensor-Sender seine Identifikation mit einem empfängerspezifischen Code verschlüsselt.

Grundsätzlich ist eine Verschlüsselung telemetrisch übermittelter Daten bekannt, wobei nicht nur die Abhörsicherheit eine Rolle spielt, sondern wobei es auch zu verhindern gilt, dass der Daten-Empfänger manipulierte Daten erhält bzw. solche als nicht vom zugeordneten Sender stammend erkennt. Auch in Kraftfahrzeugen spielt die telemetrische Datenübertragung eine immer größere Rolle. Neuere Reifendruck-Kontrollsysteme beispielsweise ermitteln einen Druckverlust eines Fahrzeug-Reifens nicht mehr aus einem Vergleich der Rad-Drehzahlen der verschiedenen Fahrzeugräder und auch nicht mehr über eine Analyse der beispielsweise am Stoßdämpfer feststellbaren Vertikalschwingungen des Rades, sondern durch eine tatsächliche Messung des Luftdrucks im Reifen, wofür in diesem ein Drucksensor vorgesehen ist. Auf relativ einfache Weise an eine elektronische Überwachungseinheit, die an der Karosserie des Fahrzeugs angeordnet ist, übertragen werden können diese Messwerte nur über Funk.

Derzeit erfolgt diese Funk-Übertragung in Reifendruck-Kontrollsystemen in Form standardisierter sog. Telegramme über eine im wesentlichen festgelegte Funk-Frequenz unverschlüsselt. Allenfalls kann dabei eine geringe randomisierte Verschiebung der Sendezeitpunkte der Telegramme vorgesehen sein, um eine kontinuierliche Frequenz-Auslöschung zu vermeiden. Jedenfalls theoretisch könnten dabei mittels computergesteuerter Funktransceiver die übermittelten Daten nicht nur abgehört werden, sondern es könnten auch manipulierte Daten ausgesendet werden und somit in die besagte elektronische Überwachungseinheit eines Kraftfahrzeugs gelangen. Würden diese manipulierten Daten auf einen starken Druckverlust deuten, würde daraufhin der Fahrer des Kraftfahrzeugs zum Anhalt aufgefordert. Dies könnte also theoretisch für einen Überfall auf das Kraftfahrzeug bzw. auf dessen Insassen genutzt werden. Als Abhilfe kommt eine verschlüsselte Funkübertragung in Betracht, jedoch verlängern übliche Schlüssel die zu übertragende Datenmenge, was grundsätzlich unerwünscht sein kann, bei einem Reifendruck-Kontrollsystem jedoch besonders unerwünscht ist, da die Kapazität der neben einem Sender und dem Drucksensor sowie gegebenenfalls weiterer Sensoren im Reifen vorgesehenen Batterie zur Versorgung dieser genannten Elemente mit elektrischer Energie hierdurch zusätzlich bzw. verstärkt belastet werden würde. Diese besagte Batterie soll jedoch eine möglichst hohe Lebensdauer aufweisen.

Daher soll hier eine Verschlüsselung für telemetrisch übermittelte Daten aufgezeigt werden, die keine, zumindest keine signifikante, Verlängerung der zu übertragenden Daten-Telegramme zur Folge hat (= Aufgabe der vorliegenden Erfindung).

Die Lösung dieser Aufgabe ist für ein Verfahren zur verschlüsselten Funk-Übertragung von Daten nach dem Oberbegriff des Anspruchs 1 dadurch gekennzeichnet, dass als Schlüssel die zwischen einem vorangegangenen Telegramm und dem die gewünschte Daten-Übertragung ausführenden verschlüsselten Telegramm verstrichene Zeitspanne verwendet wird, wobei sich diese Zeitspanne aus einem im System vorliegenden Wert oder Betrag einer Kenngröße ergibt. Vorteilhafte Weiterbildungen sind Inhalt der Unteransprüche.

Der vorliegenden Erfindung liegt die Idee zugrunde, die besagten Telegramme nicht in einem fixen Zeitraster zu senden, sondern innerhalb bestimmter Zeitscheiben den Sendezeitpunkt mit Hilfe eines kryptologischen Verfahrens zu ermitteln, so dass der Sendezeitpunkt selbst die Schlüsselinformation darstellt. So ist der Zeitabstand zwischen zwei aufeinander folgenden Telegrammaussendungen wie folgt darstellbar:
Δt(m) = t_{Tx}(m) - t_{Tx}(n), wobei t_{Tx}(n) der Zeitpunkt ist, bei dem das Telegramm mit der Nummer n geschickt wurde und Δt(m) > 0 eine im wesentlichen kryptologische Funktion zumindest eines im System bekannten Parameters ist. Vorzugsweise ist dieser Parameter in Form eines im System vorliegenden Wertes oder Betrags einer Kenngröße und die besagte kryptologische Funktion Δt(m) sowohl im Sender als auch im Empfänger bekannt, da dann die Zeitdauer zwischen einem vorhergehend gesendeten Telegramm und einem aktuell zu sendenden oder empfangenen Telegramm sowohl im Sender als auch im Empfänger aus einem vorhergehend übermittelten Wert oder Betrag einer Kenngröße bestimmt werden kann. Ist dieser vorzugsweise veränderliche Parameter jedoch nur im Sender bekannt, so kann die Zeitdauer selbstverständlich auch nur im Sender ermittelt werden, so dass diese dem Empfänger für ein künftiges Telegramm drahtlos übermittelt werden muss. Zwar vergrößert sich mit dieser zusätzlich zu übertragenden Information die zu übertragende Datenmenge geringfügig, jedoch ist der Aufwand zur Übertragung dieser zusätzlichen Information vertretbar gering, und zwar auch dann, wenn diese zusätzliche Information nach einem bekannten Verfahren verschlüsselt übertragen wird.

Bei Anwendung des erfindungsgemäßen Verfahrens in einem Reifendruck-Kontrollsystem eines Kraftfahrzeugs, wobei die zu übertragenden Daten von einem in einem Fahrzeug-Reifen vorgesehenen Sensor stammen und an einen am Fahrzeug-Aufbau vorgesehenen Empfänger drahtlos verschlüsselt übermittelt werden, kommen verschiedene Parameter zur Bestimmung der besagten Zeitspanne in Frage. Als physikalischer bzw. elektrischer Parameter kann der Wert oder Betrag beispielsweise des vom genannten Sensor ermittelten Drucks im Reifen herangezogen werden; zusätzlich oder alternativ die von einem Sensor ermittelte Temperatur im Reifen. Verwendet werden kann aber auch die geeignet ermittelbare Rotationsgeschwindigkeit und/oder Rotationsrichtung des Reifens oder die sensorisch ermittelte Reifenaufstandskraft auf der Fahrbahn oder die Restlebensdauer der im Reifen vorgesehenen Batterie, wobei jeweils auch eine Kombination mehrerer Kenngrößen wählbar ist. Gleiches gilt, wenn als Kenngröße (oder Parameter) die zur Unterscheidung der Reifen übermittelte Identifikationsnummer (beispielsweise des Druck-Sensors) oder eine in einem vorangegangenen Übertragungsschritt als Schlüssel verwendete Zeitdauer verwendet wird.

Für Reifendruck-Kontrollsysteme mit Funkübertragung von Daten ist derzeit bekanntlich ein sog. standardisiertes Funktelegramm vorgeschrieben, welches mindestens einmal pro Minute in Form eines Basistelegramms mit Druck- und Temperaturinformation zu senden ist. Mit dieser Vorschrift ist herstellerübergreifend die Kompatibilität für eine Minimalfunktion, nämlich für die reine Druckwarnung gewährleistet. Verschiedene Hersteller von Kraftfahrzeugen übertragen zusätzlich zu diesem Basistelegramm noch weitere Daten, die beispielsweise für eine Fahrdynamik-Regelung des Fahrzeugs verwendet werden können. Bei einem erfindungsgemäß arbeitenden Reifendruck-Kontrollsystem kann nun vorgesehen sein, dass diese vorgeschriebenen standardisierten Funktelegramme lediglich zur Markierung der Zeitsynchronisierung benutzt werden, während herstellerspezifische Telegramme mit zusätzlichen Informationen und insbesondere mit erfindungsgemäß verschlüsselter Information über den Reifendruck und die relevante Temperatur zwischen diesen standardisierten Funktelegramm unter Anwendung des erfindungsgemäßen Verfahrens übertragen werden. In diesem Sinne kann allgemein, d.h. nicht auf ein Reifendruck-Kontrollsystem beschränkt, ein vorangegangenes Telegramm im wesentlichen nur zur Festlegung des Beginns der Zeitspanne für das die gewünschte Daten-Übertragung ausführende verschlüsselte Telegramm übermittelt werden. Im übrigen kann die Bit-Länge des erfindungsgemäßen Schlüssels optional noch verlängert werden, indem man zusätzlich zur Bitinformation, welche über den Sendezeitpunkt übertragen wird, eine weitere Bitsequenz an das Telegramm anfügt. Damit kann die Bit-Länge an die Schutzbedürftigkeit der zu übertragenden Daten dynamisch angepasst werden.

Nach einer vorteilhaften Weiterbildung wird die besagte Zeitspanne zusätzlich unter Berücksichtigung von Randbedingungen ermittelt, und zwar im Hinblick darauf, wie häufig innerhalb eines bestimmten Zeitraumes die übertragenen Daten bzw. Informationen benötigt werden. So ist beispielsweise bei höheren Fahrgeschwindigkeiten des Fahrzeugs eine häufigere Datenübertragung erwünscht als bei einer niedrigeren Fahrgeschwindigkeit, da jedenfalls bei der herkömmlichen Funkübertragung die Ausbeute an richtig empfangenen Informationen wegen Auslöschungseffekten bei höheren Fahrgeschwindigkeiten geringer ist; ferner ist bei letzteren auch die Wahrscheinlichkeit von signifikanten Änderungen größer. In diesem Sinne kann die Bestimmung der besagten Zeitspanne zwischen aufeinander folgenden Telegrammen solchermaßen erfolgen, dass sich bei Abhängigkeit von der Rotationsgeschwindigkeit des Reifens bei höherer Geschwindigkeit eine kürzere Zeitspanne als bei niedrigerer Geschwindigkeit ergibt. Wenn eine Abhängigkeit der besagten Zeitspanne vom Reifen-Druck gewählt wird, so kann sich sinnvollerweise eine kürzere Zeitspanne ergeben, wenn die Änderung des Drucks über aufeinanderfolgende Telegramme betrachtet relativ groß ist, während sich eine größere Zeitspanne ergibt, wenn über aufeinanderfolgende Telegramme betrachtet praktisch keine Änderung des Drucks feststellbar ist. Alternativ kann auch der Absolutwert des vom Sensor gemessenen Drucks im Reifen berücksichtigt werden, dahingehend dass bei relativ niedrigen Druck-Werten kürzere Zeitspannen gewählt werden und somit innerhalb eines gewissen Zeitraumes eine größere Anzahl von Telegrammen gesendet wird.

Ferner kann vorgesehen sein, dass eine Fehlinformation, die vom Empfänger in einem Zeitfenster, welches nicht mit der als Schlüssel verwendeten Zeitdauer übereinstimmt, empfangen wird, als solche registriert und gespeichert wird. Somit kann also festgestellt werden, ob eine gezielte Manipulations-Attacke erfolgt ist, d.h. ob gezielt Fehlinformationen zum Empfänger gesendet wurden, wobei der Fahrer des Fahrzeugs hierüber informiert werden kann. In diesem Zusammenhang kann mit weiteren Antennen am Fahrzeug auch die Entfernung und der Ort der Attacke-Quelle geschätzt werden. Im übrigen könnte mit dem weiter oben bereits genannten herkömmlichen standardisierten Funktelegramm eines Reifendruck-Kontrollsystems ein Position-Tracker/Spionage-System durch den Empfang von einer übertragenen Identifikationsnummer eines Sensors beweisen, dass sich ein bestimmtes Fahrzeug zu einer bestimmten Zeit an einem bestimmten Ort befunden hat und damit die Privatspähre des Fahrers verletzten. Mit dem vorgeschlagenen Verfahren wird die Erfolgswahrscheinlichkeit eines solchen Spionage-Systems erheblich gesenkt, und zwar nicht nur dann, wenn wie fakultativ vorgeschlagen bei niedrigen Fahrgeschwindigkeiten weniger Telegramme gesendet werden, sondern insbesondere auch deshalb, weil für eine stichhaltige Beweisführung, dass sich ein Fahrzeug an einem bestimmten Ort befand, ein einmaliger Empfang einer Identifikationsnummer nicht ausreicht, sondern mehrere Telegramme mit dem richtigen Zeitabstand benötigt werden. Dies würde nicht nur die Komplexität eines Position-Tracker/Spionage-Systemes erhöhen, sonder es ist insbesondere aufgrund der Fortbewegung des Fahrzeugs nicht möglich, mehrerer Telegramme von einer festen Antenne bzw. eines Trackingsystems zu empfangen.

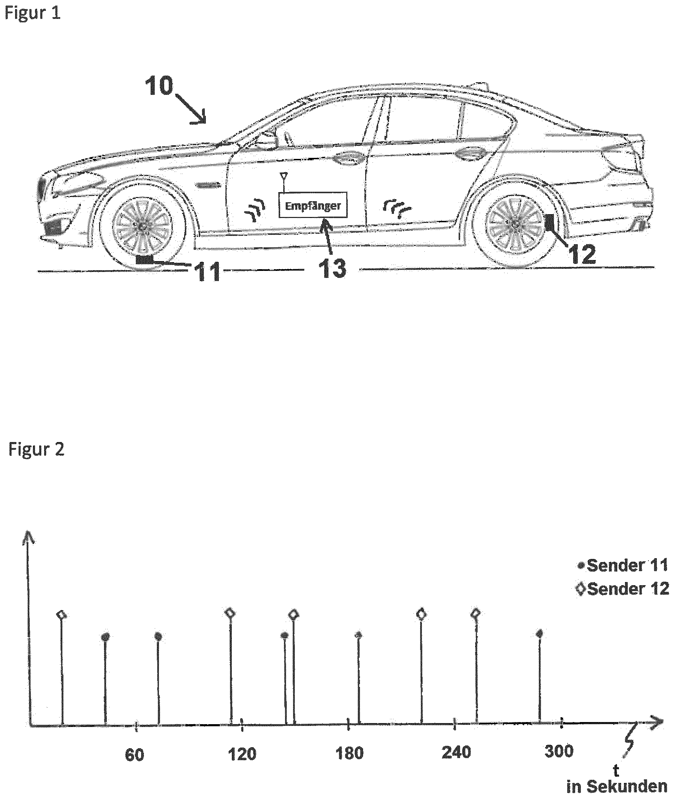

Für ein einfaches Ausführungsbeispiel der vorliegenden Erfindung sei auf die beiden beigefügten Figuren verwiesen, wobei **Figur 1** einen Personenkraftwagen als Fahrzeug zeigt, in dem ein mit erfindungsgemäßer Funk-Übertragung arbeitendes Reifendruck-Kontrollsystem installiert ist, während in **Figur 2** beispielhaft Sende-Telegramme zweier Räder dieses Fahrzeugs über der Zeit t dargestellt sind.

In Fig.1 ist mit der Bezugsziffer 10 ein Fahrzeug in Form eines üblichen Personenkraftwagens gekennzeichnet. In jedem Rad dieses Fahrzeugs befindet sich ein Sender, vorliegend Sender 11 im linken Vorderrad und Sender 12 im linken Hinterrad, von denen jeder Daten aus dem jeweiligen Fahrzeug-Reifen, insbesondere den im Reifen herrschenden Druck (= Fülldruck des jeweiligen Reifens) und die im Reifen herrschende Temperatur an einen am Fahrzeug-Aufbau montierten Empfänger 13 drahtlos und dabei verschlüsselt übermittelt. An den Empfänger 13 angeschlossen ist eine nicht separat dargestellte elektronische Steuer- und Recheneinheit angeschlossen, die die empfangenen Signale geeignet auswertet. Auch in jedem Sender 11, 12 ist eine kleine elektronische Steuereinheit vorgesehen, die unter anderem die Aussendung der jeweiligen Signale an den Sender veranlasst.

Figur 2 zeigt in einem Diagramm über der auf der Abszisse in Sekunden aufgetragenen Zeit t beispielshaft die Sendetelegramme der beiden Sender 11, 12 über einen Zeitraum von 300 Sekunden. Auf der Ordinate ist beispielsweise die empfangene Feldstärke aufgetragen; der Inhalt der einzelnen Diagramme ist hier nicht ersichtlich, aber für die vorliegende Figurendarstellung auch nicht wesentlich. Erläutert sei lediglich, dass diejenigen Sendetelegramme, deren in der Figur oberes Ende einen ausgefüllten Kreis trägt, vom Sender 11 stammen, während diejenigen Diagramme, deren oberes Ende durch eine nicht ausgefüllte Raute gebildet ist, vom Sender 12 stammen. Wie die Figur 2 zeigt, sendet jeder Sender 11, 12 innerhalb von 60 Sekunden jeweils ein Telegramm aus, wobei die exakten Sende-Zeitpunkte für einen Außenstehenden scheinbar zufällig gewählt sind, sich dabei jedoch nach dem vorliegend beschriebenen Verfahren ermitteln und den Schlüssel für die vorliegend beschriebene Verschlüsselung darstellen.

Neben der sicheren Datenübertragung, aufgrund derer eine Manipulation zuverlässig erkennbar ist weil ohne Kenntnis des Verschlüsselungsmodus technisch keine Möglichkeit besteht, den korrekten Sendezeitpunkt zu berechnen, zeichnet sich das erfindungsgemäße Verfahren dadurch aus, dass der Batterieverbrauch beim Senden praktisch nicht erhöht wird, da die Sendedauer gegenüber dem bisherigen Stand der Technik nicht verlängert wird. Vorteilhafterweise sinkt im Anwendungsfall eines Reifendruck-Kontrollsystems die Kollisionswahrscheinlichkeit von Telegrammen der verschiedenen Fahrzeugräder, da die genannten Parameter weitgehend voneinander unabhängig sind. Vorteilhafterweise können im gleichen Anwendungsfall die bereits genannten standardisierten Funktelegramme weiter übertragen werden, so dass eine Kompatibilität mit allen auf dem Markt erhältlichen Systemen gegeben ist. Ferner kann bei hoher Anforderung für die Datensicherheit eines Fahrzeuges durch zusätzliches Verschlüsseln der bereits mehrfach genannten Identifikationsnummer eine absolute Spionage-Sicherheit gewährleistet werden. Schließlich ist es möglich, das erfindungsgemäße Verfahren dazu einzusetzen, dass das Programmieren von Reifeninformationen in Reifensensoren nur durch qualifiziertes Personal in sicheren Werkstattprozessen erfolgen kann, d.h. durch ein Authentifizierungsverfahren werden die dem Fahrzeug zugeordneten Radelektroniken mit Reifendaten einem Fahrzeug fest zugeordnet.

## Patentansprüche

1. Verfahren zur verschlüsselten Funk-Übertragung von Daten eines Reifendruck-Kontrollsystems eines Kraftfahrzeugs, wobei die zu übertragenden Daten von einem in einem Fahrzeug-Reifen vorgesehenen Sensor stammen und an einen am Fahrzeug-Aufbau vorgesehenen Empfänger drahtlos in Form kurzer zeitlich beabstandet aufeinander folgender Telegramme kryptologisch verschlüsselt übermittelt werden,
**dadurch gekennzeichnet, dass** zur Verschlüsselung ein veränderlicher Schlüssel verwendet wird, der durch die zwischen einem vorangegangenen Telegramm, welches zur Festlegung des Beginns der Zeitspanne für das die gewünschte Daten-Übertragung ausführende verschlüsselte Telegramm übermittelt wird und dem die gewünschte Daten-Übertragung ausführenden verschlüsselten Telegramm verstrichene Zeitspanne gebildet wird, wobei sich diese Zeitspanne aus einem im Reifendruck-Kontrollsystem vorliegenden Wert oder Betrag einer Kenngröße ergibt, und wobei das vorangegangene Telegramm das für Reifendruck-Kontrollsysteme vorgeschriebene standardisierte Funktelegramm ist, welches mindestens einmal pro Minute in Form eines Basistelegramms mit Druck- und Temperaturinformation zu senden ist.

2. Verfahren nach Anspruch 1, wobei der Wert oder Betrag einer der folgenden Kenngrößen oder eine daraus abgeleiteten Größe zur Festlegung der Zeitspanne verwendet wird:
• der vom Sensor ermittelte Druck im Reifen
• die vom Sensor ermittelte Temperatur im Reifen
• die Rotationsgeschwindigkeit des Reifens
• die Rotationsrichtung des Reifens
• die Reifenaufstandskraft auf der Fahrbahn
• die Restlebensdauer der im Reifen vorgesehenen Batterie
• eine Identifikationsnummer des Sensors
• eine in einem vorangegangenen Übertragungsschritt als Schlüssel verwendete Zeitdauer

3. Verfahren nach Anspruch 1 oder 2,
**dadurch gekennzeichnet, dass** die Zeitdauer im Sender und im Empfänger aus einem vorhergehend übermittelten Wert oder Betrag einer Kenngröße bestimmt wird.

4. Verfahren nach Anspruch 1 oder 2,
**dadurch gekennzeichnet, dass** die Zeitdauer nur im Sender ermittelt und dem Empfänger für ein künftiges Telegramm drahtlos übermittelt wird.

5. Verfahren nach einem der vorangegangenen Ansprüche,
**dadurch gekennzeichnet, dass** die Bestimmung der Zeitspanne solchermaßen erfolgt, dass sich
• bei einer Abhängigkeit vom Reifen-Druck eine kürzere Zeitspanne ergibt, wenn die Änderung des Drucks über aufeinanderfolgende Telegramme betrachtet relativ groß ist, während sich eine größere Zeitspanne ergibt, wenn über aufeinanderfolgende Telegramme betrachtet praktisch keine Änderung des Drucks feststellbar ist,
• bei Abhängigkeit von der Rotationsgeschwindigkeit des Reifens bei höherer Geschwindigkeit eine kürzere Zeitspanne als bei niedrigerer Geschwindigkeit ergibt

6. Verfahren nach einem der vorangegangenen Ansprüche,
**dadurch gekennzeichnet, dass** eine Fehlinformation, die vom Empfänger in einem Zeitfenster, welches nicht mit der als Schlüssel verwendeten Zeitdauer übereinstimmt, empfangen wird, als solche registriert und gespeichert wird.

## Claims

1. A method for encrypted radio transmission of data of a tyre pressure control system of a motor vehicle, wherein the data to be transmitted originate from a sensor provided in a vehicle tyre and are wirelessly transmitted, cryptologically encrypted, in the form of short successive temporally spaced telegrams to a receiver provided on the vehicle structure,
**characterised in that** a variable key is used for encryption, which key is formed by the period of time that has elapsed between a prior telegram, which is transmitted to define the start of the period of time for the encrypted telegram performing the desired data transmission, and the encrypted telegram performing the desired data transmission, wherein this period of time results from a value or amount of a characteristic variable present in the tyre pressure control system, and wherein the prior telegram is the standardised radio telegram prescribed for tyre pressure control systems, which is to be transmitted at least once per minute in the form of a base telegram with pressure and temperature information.

2. A method according to claim 1, wherein the value or amount of one of the following characteristic variables or a variable derived therefrom is used to define the period of time:
• the pressure in the tyre determined by the sensor
• the temperature in the tyre determined by the sensor
• the rotational speed of the tyre
• the rotational direction of the tyre
• the vertical tyre force on the roadway
• the remaining service life of the battery provided in the tyre
• an identification number of the sensor
• a period of time used as key in a prior transmission step.

3. A method according to claim 1 or 2,
**characterised in that** the period of time in the transmitter and in the receiver is determined from a previously transmitted value or amount of a characteristic variable.

4. A method according to claim 1 or 2,
**characterised in that** the period of time is determined only in the transmitter and is wirelessly transmitted to the receiver for a future telegram.

5. A method according to any one of the preceding claims, **characterised in that** the period of time is defined in such a way that
• with a dependency on the tyre pressure, a shorter period of time is obtained when, considered over successive telegrams, the change in pressure is relatively great, whereas a greater period of time is obtained when, considered over successive telegrams, practically no change in pressure can be determined,
• with dependency on the rotational speed of the tyre, a shorter period of time is obtained at higher speed than at lower speed.

6. A method according to any one of the preceding claims,
**characterised in that** misinformation received by the receiver in a time window not corresponding to the period of time used as key is registered and stored as such.

## Revendications

1. Procédé de transmission radio chiffré de données d'un système de contrôle de pression d'un pneumatique de véhicule automobile selon lequel les données à transmettre proviennent d'un capteur équipant un pneumatique du véhicule et qui sont transmises à un récepteur équipant la carrosserie du véhicule par une liaison sans fil sous la forme de télégrammes chiffrés de manière cryptologique qui se suivent en étant écartés d'un court instant,
procédé **caractérisé en ce que**
pour le chiffrage on utilise une clef variable formée à partir du temps écoulé entre un télégramme précédent transmis pour fixer le début de la durée pour le télégramme chiffré réalisant la transmission souhaitée des données et le télégramme chiffré qui assure la transmission souhaitée des donnée,
- cette durée résultant d'une valeur contenue dans le système de contrôle de la pression pneumatique ou de l'amplitude d'une grandeur caractéristique, et
- le télégramme précédent étant le télégramme radio standardisé prescrit par le système de contrôle de pression pneumatique qui doit être envoyé au moins une fois par minute sous la forme d'un télégramme de base avec une information de pression et de température.

2. Procédé selon la revendication 1,
**caractérisé en ce qu'**
on utilise la valeur ou l'amplitude de l'une des grandeurs caractéristiques ou d'une grandeur qui en est déduite pour fixer la durée à savoir :
- la pression du pneumatique fourni par le capteur,
- la température du pneumatique fourni par le capteur,
- la vitesse de rotation du pneumatique,
- le sens de rotation du pneumatique,
- la force standard d'appuie exercée par le pneumatique sur la chaussée,
- la durée de vie résiduelle de la matrice équipant le pneumatique,
- un numéro d'identification du capteur,
- une durée utilisée comme clef dans une étape de transmission précédente.

3. Procédé selon la revendication 1 ou 2,
**caractérisé en ce qu'**
on détermine la durée dans l'émetteur ou dans le récepteur à partir d'une valeur ou d'une amplitude, d'une grandeur caractéristique transmise précédemment.

4. Procédé selon la revendication 1 ou 2,
**caractérisé en ce qu'**
on détermine la durée seulement dans l'émetteur et on la transmet au récepteur par une transmission sans fil pour un télégramme futur.

5. Procédé selon l'une des revendications précédentes,
**caractérisé en ce que**
la détermination de la durée se fait de façon que
- en fonction de la pression pneumatique on obtient une durée plus courte si la variation de la pression considérée pour des télégrammes successifs est relativement importante alors que l'on a une durée plus grande si, en tenant compte des télégrammes successifs, on ne constate pratiquement aucune variation de la pression,
- en fonction de la vitesse de rotation du pneumatique à vitesse élevée, on a une durée plus courte qu'à vitesse faible.

6. Procédé selon l'une des revendications précédentes,
**caractérisé en ce qu'**
une information de défaut qui ne coïncide pas pour le récepteur à une fenêtre de temps, pour la durée utilisée comme clef, est reçue, est enregistrée en tant que telle et est mémorisée.
